# EUROPÄISCHE PATENTSCHRIFT

(11) **EP 2 245 339 B1**
(45) Veröffentlichungstag und Bekanntmachung des Hinweises auf die Patenterteilung: **14.01.2015**
(21) Anmeldenummer: 09715612.9
(22) Anmeldetag: 29.01.2009
(51) Int. Cl.: F16H 55/17, F16D 13/52

(54) **BAUTEIL MIT INNEN- UND AUSSENVERZAHNUNG SOWIE VERFAHREN ZUR HERSTELLUNG DES BAUTEILES**
COMPONENT WITH INNER AND OUTER TEETH AND METHOD FOR MANUFACTURING THE COMPONENT
PIÈCE À DENTURE INTERNE ET EXTERNE AINSI QUE PROCÉDÉ POUR PRODUIRE CETTE PIÈCE

(30) Priorität: 28.02.2008 DE 102008000431
(43) Veröffentlichungstag der Anmeldung: 03.11.2010
(73) Patentinhaber: ZF Friedrichshafen AG, 88038 Friedrichshafen (DE)
(72) Erfinder: MEYER, Martin, 66265 Heusweiler (DE); ADAMSKI, Klemens, 66132 Saarbrücken (DE); HÖHNE, Peter, 66299 Friedrichsthal (DE); MÜLLER, Wolfgang, 66793 Saarwellingen (DE); BÜCHNER, Tobias, 66557 Illingen (DE); BAUER, Christian, 66571 Eppelborn (DE)
(86) Internationale Anmeldenummer: PCT/EP2009/050971
(87) Internationale Veröffentlichungsnummer: WO 2009/106401

(56) Entgegenhaltungen:
- DE-A1- 2 224 650
- DE-A1-102007 021 194
- FR-A- 2 208 473

## Beschreibung

Die Erfindung betrifft ein Bauteil mit Innen- und Außenverzahnung nach dem Oberbegriff des Patentanspruches 1 sowie ein Verfahren zur Herstellung des Bauteiles nach dem Patentanspruch 13.

Durch die ältere Anmeldung der Anmelderin mit dem amtlichen Aktenzeichen DE 10 2007 021 194.7 ist ein Bauteil mit Innen- und Außenverzahnung offenbart, welches in Verbundbauweise aus einem Grundkörper und einem als Blechteil ausgebildeten Zusatzteil hergestellt ist. Das Bauteil ist vorzugsweise als Hohlrad eines Planetengetriebes und das Blechteil als Lamellenträger für die Lamellen eines Schaltelementes ausgebildet - das Blechteil weist daher ein entsprechendes Mitnahmeprofil auf.

Durch die deutsche Patentschrift 23 10 288, die auch die Merkmale des Oberbegriffs des Anspruch 1 beinhaltet wurde ein Planetengetriebe mit einem Hohlrad bekannt, welches als Zahnkranz ausgebildet ist, der mit Planetenrädern in Eingriff steht. Der Zahnkranz ist formschlüssig in Drehrichtung mit einer Trommel verbunden und über Anschlagorgane in axialer Richtung gegenüber der Trommel fixiert. Die Mitnahme in Drehrichtung erfolgt über radial außen angeordnete Zähne am Zahnkranz, welche in Ausbuchtungen der Trommel eingreifen. Die Trommel mit Zahnkranz fungiert lediglich als Hohlrad und ist nicht als Lamellenträger ausgebildet.

Nachteilig bei der bekannten Trommel und auch bei dem Lamellenträger der älteren Anmeldung ist, dass die mit einem Mitnahmeprofil ausgestatteten Blechteile in tangentialer und radialer Richtung relativ weich, d. h. wenig formstabil ausgebildet sind und daher bei höheren Drehzahlen, unter dem Einfluss der Fliehkraft, dazu neigen, "aufzugehen", d.h. sich in ihrem Durchmesser unter Abflachung des Profils zu vergrößern. Derartige Blechteile sind somit wenig drehzahlfest.

Es ist Aufgabe der vorliegenden Erfindung, ein Bauteil der eingangs genannten Art zu schaffen, welches auch höheren Drehzahlen standhält und seine Form beibehält. Es ist auch Aufgabe der Erfindung, ein Verfahren zur Herstellung eines derartigen Bauteiles bereitzustellen, welches eine wirtschaftliche Herstellung erlaubt.

Die Aufgabe der Erfindung wird durch die Merkmale des Patentanspruches 1 gelöst.

Erfindungsgemäß ist vorgesehen, dass das Blechteil in tangentialer und radialer Richtung mit dem Grundkörper formschlüssig verbunden ist. Durch den Formschluss in radialer Richtung wird das Blechteil an einer Verformung unter Fliehkrafteinfluss gehindert, indem es durch den steiferen Grundkörper in seiner Position gehalten wird. Damit wird eine höhere Drehzahlfestigkeit für das erfindungsgemäße Bauteil erreicht.

In vorteilhafter Ausgestaltung ist die Außenverzahnung des Blechteiles als Mitnahmeprofil ausgebildet, in welches eine korrespondierende, am Grundkörper angeordnete Mitnahmeverzahnung formschlüssig eingreift. Die Mitnahmeverzahnung am Grundkörper muss sich nicht über dessen gesamten Umfang erstrecken, sondern kann bereichsweise über einzelne Sektoren auf dem Umfang verteilt sein. Durch diese formschlüssige Verbindung zwischen Grundkörper und Blechteil wird die Drehmomentübertragung zwischen beiden Teilen sichergestellt.

In vorteilhafter Ausgestaltung weist die Mitnahmeverzahnung des Grundkörpers Zähne auf, welche im Bereich des Zahnfußes hinter- bzw. unterschnitten sind. Dadurch werden auf beiden Seiten des Zahnfußes Kerben gebildet. In diese Kerben oder unterschnittenen Bereiche am Zahnfuß greift das Mitnahmeprofil des Blechteiles derart ein, dass eine formschlüssige Verbindung in radialer Richtung gebildet wird. Das Blechteil schmiegt sich somit mit seinem Mitnahmeprofil an die Kontur der Mitnahmeverzahnung am Grundkörper an und bildet somit jeweils zwischen benachbarten Zähnen eine Art Schwalbenschwanzverbindung, welche eine Radialbewegung des Blechteiles - beispielsweise unter Fliehkrafteinfluss bei höheren Drehzahlen - verhindert. Durch diese radiale Sicherung wird der Vorteil einer höheren Drehzahlfestigkeit für das Bauteil erreicht.

In vorteilhafter Ausgestaltung kann das Mitnahmeprofil nach dem Aufschieben des Blechteiles auf den Grundkörper durch Umformung, insbesondere Streckung des Materials in tangentialer Richtung in die unterschnittenen Bereiche hineingedrückt werden. Damit ergibt sich eine formschlüssige Verklammerung beider Teile, die aufgrund der plastischen Verformung des Blechteiles dauerhaft ist. Durch den Reibschluss beider Teile ergibt sich gleichzeitig eine axiale Fixierung des Blechteiles auf dem Grundkörper.

In weiterer vorteilhafter Ausgestaltung weist das Bauteil zwei Funktionen auf: einerseits ist das Blechteil als Lamellenträger ausgebildet, d. h. in das Mitnahmeprofil greifen von außen Innenlamellen eines Lamellenpaketes für ein Schaltelement, z. B. eine Kupplung oder eine Bremse ein. Andererseits ist der Grundkörper als Hohlrad mit einer Innenverzahnung ausgebildet, welche in Planetenräder eines Planetengetriebes eingreift. Als Werkstoff für den Grundkörper kann vorzugsweise ein Zahnradwerkstoff, z. B. ein einsatzhärtbarer Stahl für die Herstellung der Innenverzahnung verwendet werden. Für den Lamellenträger dagegen wird vorzugsweise ein Tiefziehstahl verwendet. Das Mitnahmeprofil ist vorzugsweise als Trapezprofil ausgebildet.

In weiterer vorteilhafter Ausgestaltung weist das Bauteil bzw. das Hohlrad einen Hohlradträger auf, welcher - wie der Lamellenträger - als Blechteil, insbesondere als Scheibe ausgebildet ist, welche vorteilhaft formschlüssig mit dem Grundkörper verbunden ist. Damit ergibt sich eine kostengünstige Herstellung für das Hohlrad mit Lamellenträger.

Die Aufgabe der Erfindung wird auch durch ein Verfahren mit den Merkmalen des Patentanspruches 15 gelöst. Erfindungsgemäß ist vorgesehen, dass zunächst der Grundkörper und das Blechteil separat hergestellt und anschließend gefügt werden. Dabei erfolgt die Herstellung des Grundkörpers vorzugsweise spangebend, während die Herstellung des Blechteiles, insbesondere des Mitnahmeprofils spanlos, d. h. durch Umformung erfolgt.

Nach einer vorteilhaften Ausgestaltung wird bei der Herstellung des Mitnahmeprofils zunächst ein Vorprofil hergestellt, und nach dem Fügen des Blechteiles mit dem Grundkörper das Endprofil, welches den Formschluss in radialer Richtung zwischen Grundkörper und Blechteil bewirkt. Mit dem Vorprofil lässt sich der Lamellenkörper leicht auf den Grundkörper schieben (Vormontage).

Anschließend kann durch radiales Zustellen oder Drücken auf den konkaven Bereich eine Streckung des Materials in tangentialer Richtung erreicht werden, sodass das Material in die hinterschnittenen Bereiche am Zahnfuß verdrängt wird. Dadurch entsteht eine feste, enge und beständige Umklammerung des Zahnfußes durch das Mitnahmeprofil des Blechteiles. Das erfindungsgemäße Verfahren ist wirtschaftlich, insbesondere, da es spanlos erfolgt, und führt somit zu geringen Herstellkosten des erfindungsgemäßen Bauteiles, insbesondere eines Getriebebauteiles.

Ein Ausführungsbeispiel der Erfindung ist in der Zeichnung dargestellt und wird im Folgenden näher beschreiben.

Es zeigen
Fig. 1 einen Hohlradträger (Einzelteil),
Fig. 2 einen Grundkörper (Einzelteil),
Fig. 3 einen Lamellenträger (Einzelteil),
Fig. 4 ein Hohlrad mit Lamellenträger (Zusammenbau),
Fig. 5 das Hohlrad gemäß Fig. 4 in einer anderen Ansicht,
Fig. 6 einen Teilschnitt durch Lamellenträger und Grundkörper vor der Umformung und
Fig. 7 einen Teilschnitt durch Lamellenträger und Grundkörper nach der Umformung.

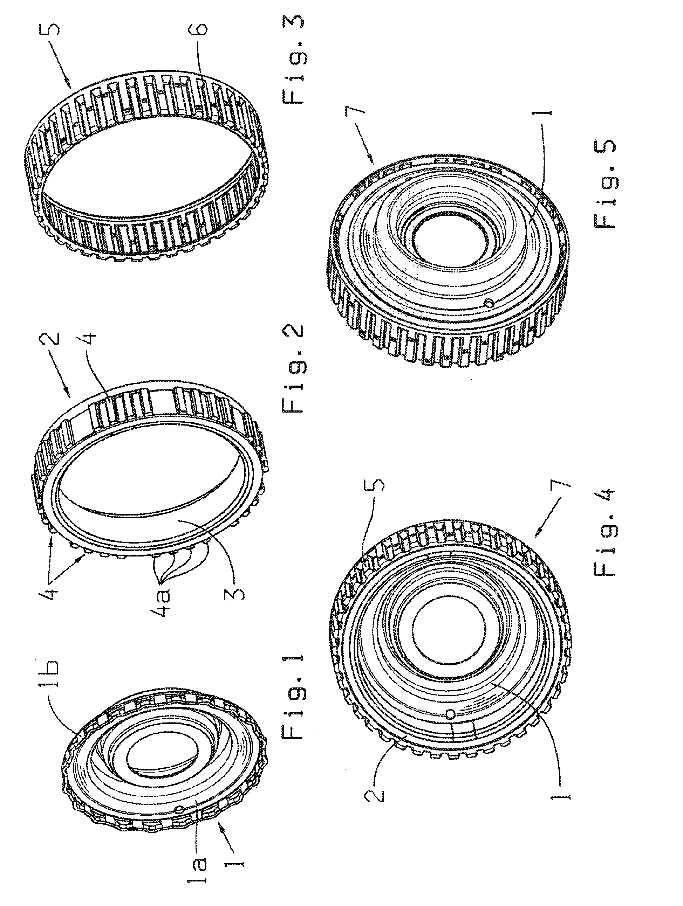

**Fig. 1** zeigt einen als Blechteil ausgebildeten Hohlradträger 1 als Einzelteil. Der Hohlradträger 1 ist als Scheibe 1a ausgebildet, deren umfangseitiger Rand zu einem Befestigungsflansch 1 b umgeformt ist.

**Fig. 2** zeigt einen Grundkörper 2 als Einzelteil, welcher zunächst als Guss- oder Schmiederohling hergestellt wird. Der Grundkörper 2 weist eine nur angedeutete Innenverzahnung 3 auf, welche spangebend hergestellt und einsatzgehärtet wird. Auf seinem Außenumfang weist der Grundkörper 2 einzelne über den Umfang verteilte Bereiche einer Mitnahmeverzahnung 4, bestehend aus einzelnen Zähnen 4a, auf.

**Fig. 3** zeigt einen Lamellenträger 5, welcher als Blechteil ausgebildet und durch Umformung hergestellt wird. Der Lamellenträger 5 weist ein Mitnahmeprofil 6 auf, welches der formschlüssigen Verbindung mit nicht dargestellten Innenlamellen eines Lamellenpaketes für ein Schaltelement eines Getriebes dient. Das Mitnahmeprofil 6 ist vorzugsweise trapezförmig ausgebildet und entspricht dem Profil der Mitnahmeverzahnung 4 am Grundkörper 2.

**Fig. 4** zeigt den Zusammenbau der vorgenannten drei Einzelteile 1, 2, 5 zu einem Hohlrad 7. Der Hohlradträger 1 wird über seinen Flansch 1 b durch Umformung formschlüssig mit dem Grundkörper 2 verbunden, sodass beide Teile in Drehrichtung frei drehbar und in Axialrichtung gegeneinander fixiert sind. Der Lamellenträger 5 wird in axialer Richtung über den Grundkörper 2 geschoben, wobei die Bereiche der Mitnahmeverzahnung 4 in das Mitnahmeprofil 6 eingreifen und somit eine formschlüssige Verbindung in Drehrichtung bilden.

**Fig. 5** zeigt das Hohlrad 7 in einer anderen Perspektive, d. h. mit Blick auf den äußeren Teil des Hohlradträgers 1. Das Hohlrad 7 ist somit in Verbundbauweise hergestellt, d. h. es umfasst zwei durch Umformung hergestellte Blechteile 1, 5 sowie den spangebend bearbeiteten Grundkörper 2. Das Hohlrad 7 wird generell auch als Bauteil mit einer Innenverzahnung 3 und einer Außenverzahnung 6 bezeichnet.

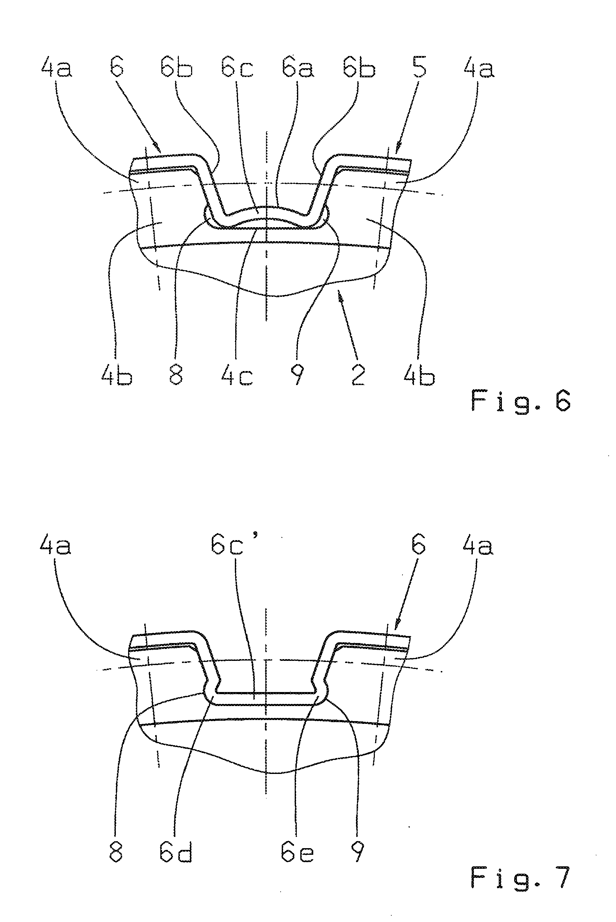

**Fig. 6** zeigt einen Teilschnitt im Bereich der Mitnahmeverzahnung 4 des Grundkörpers 2 sowie des Mitnahmeprofis 6 des Lamellenträgers 5. Die Zähne 4a weisen im Bereich ihres Zahnfußes 4b hinter- oder untschnittene Bereiche 8, 9 auf, welche als runde Kerben am jeweiligen Zahnfuß 4b ausgebildet sind. In die Zahnlücke zwischen den beiden benachbarten Zähnen 4a greift ein Zahn 6a des Mitnahmeprofils 6 ein. Der Zahn 6a weist zwei gerade Flanken 6b sowie einen konkav ausgebildeten (in der Zeichnung nach oben gewölbten) Zahnkopf 6c auf, welcher gegenüber dem Zahngrund 4c der Mitnahmeverzahnung 4 hohl aufliegt. Das konkave Zahnkopfprofil 6 c bildet ein Vorprofil bei der Herstellung des Hohlrades 7, wobei der Lamellenträger 5 mit diesem Vorprofil auf die Mitnahmeverzahnung 4 des Grundkörpers 2 geschoben wird.

**Fig. 7** zeigt den gleichen Teilschnitt wie in Fig. 6, jedoch nach einer Umformung des Mitnahmeprofils 6, d. h. nach dem Strecken des konkaven Zahnkopfbereiches 6c, der in seiner gestreckten Form mit der Bezugszahl 6c' bezeichnet ist. Durch Ausübung einer nicht dargestellten, radial nach innen gerichteten Kraft auf die Kuppe des konkaven Bereiches 6c (Fig. 6) wird dieser in eine im Wesentlichen gerade Lage 6c' gestreckt, wodurch die Eckbereiche als Ausprägungen 6d, 6e in die unterschnittenen Bereiche 8, 9 am Zahnfuß 4b verdrängt werden. Dadurch entsteht eine vollständige Anlage des Mitnahmeprofils 6 an der Mitnahmeverzahnung 4 des Grundkörpers 2 und damit eine formschlüssige Verbindung nach Art eines Schwalbenschwanzes. Dadurch werden das Mitnahmeprofil 6 am Grundkörper 2 auch bei Fliehkrafteinwirkung unter höheren Drehzahlen gehalten und ein radiales Ausweichen, welches zum "Aufgehen" des Lamellenträgers 5 führen würde, verhindert. Durch den Reibschluss im Bereich der Schwalbenschwanzverbindung wird der Lamellenträger 5 gleichzeitig in axialer Richtung gegenüber dem Grundkörper 2 und damit auf dem Hohlrad 7 fixiert.

### Bezugszeichen

- 1: Hohlradträger
- 1a: Scheibe
- 1b: Flansch
- 2: Grundkörper
- 3: Innenverzahnung
- 4: Mitnahmeverzahnung
- 4a: Zahn
- 4b: Zahnfuß
- 4c: Zahngrund
- 5: Lamellenträger
- 6: Mitnahmeprofil
- 6a: Zahnprofil
- 6b: Zahnflanke
- 6c: Zahnkopf
- 6c': Zahnkopf (nach Umformung)
- 6d: Ausprägung
- 6e: Ausprägung
- 7: Hohlrad
- 8: Unterschnitt (Kerbe)
- 9: Unterschnitt (Kerbe)

## Patentansprüche

1. Bauteil mit Innenverzahnung (3) und Außenverzahnung (6), wobei das Bauteil (7) einen die Innenverzahnung (3) aufweisenden Grundkörper (2) und ein die Außenverzahnung (6) aufweisendes Blechteil (5) umfasst, das Blechteil (5) mit dem Grundkörper (2) formschlüssig in tangentialer und in radialer Richtung verbunden ist und das Blechteil (5) ein Mitnahmeprofil (6) und der Grundkörper (2) eine zumindest teilweise in das Mitnahmeprofil (6) eingreifende Mitnahmeverzahnung (4, 4a) aufweist, **dadurch gekennzeichnet, dass** die Mitnahmeverzahnung (4) des Grundkörpers (2) durch Zähne (4a) gebildet wird und das die Zähne (4a) hinter- bzw. unterschnittende Bereiche (8, 9) aufweisen.

2. Bauteil nach Anspruch 1, **dadurch gekennzeichnet, dass** die hinter- bzw. unterschnittenden Bereiche (8, 9) am Zahnfuß (4b) angeordnet sind.

3. Bauteil nach Anspruch 1 oder 2, **dadurch gekennzeichnet, dass** das Mitnahmeprofil (6) an der Kontur der Zähne (4a) anliegt und die hinterschnittenden Bereiche (8, 9) formschlüssig ausfüllt.

4. Bauteil nach Anspruch 1, 2 oder 3, **dadurch gekennzeichnet, dass** das Mitnahmeprofil (6) im Bereich eines Zahnkopfes (6c', 6d, 6e) Schwalbenschwanzförmig ausgebildet ist.

5. Bauteil nach einem der Ansprüche 1 bis 4, **dadurch gekennzeichnet, dass** das Mitnahmeprofil (6) durch Umformung in die hinterschnittenden Bereiche (8, 9) hineingedrückt ist.

6. Bauteil nach einem der Ansprüche 1 bis 5, **dadurch gekennzeichnet, dass** das Blechteil als Lamellenträger (5) eines Schaltelementes ausgebildet ist

7. Bauteil nach einem der Ansprüche 1 bis 6, **dadurch gekennzeichnet, dass** das Bauteil als Hohlrad (7) eines Planetengetriebes ausgebildet ist

8. Bauteil nach einem der Ansprüche 1 bis 7, **dadurch gekennzeichnet, dass** der Grundkörper (2) aus einem Zahnradwerkstoff, insbesondere einem einsatzhärtbaren Werkstoff, herstellbar ist

9. Bauteil nach einem der Ansprüche 1 bis 8, **dadurch gekennzeichnet, dass** das Mitnahmeprofil (6, 6a, 6b, 6c') etwa trapezförmig ausgebildet ist.

10. Bauteil nach einem der vorhergehenden Ansprüche, **dadurch gekennzeichnet, dass** das Bauteil (7) einen Hohlradträger (1) umfasst.

11. Bauteil nach Anspruch 10, **dadurch gekennzeichnet, dass** der Hohlradträger (1) als Blechteil ausgebildet ist

12. Bauteil nach Anspruch 10 oder 11, **dadurch gekennzeichnet, dass** der Hohlradträger (1) einen ringförmigen Flansch (1b) aufweist, welcher formschlüssig mit dem Hohlrad (7) respektive dem Grundkörper (2) verbunden ist.

13. Verfahren zur Herstellung eines Bauteiles (7) nach einem der vorhergehenden Ansprüche, **dadurch gekennzeichnet, dass** zunächst der Grundkörper (2) und das Blechteil (5) separat hergestellt und anschließend gefügt werden.

14. Verfahren nach Anspruch 13, **dadurch gekennzeichnet, dass** die Herstellung des Grundkörpers (2) eine spangebende Herstellung umfasst.

15. Verfahren nach Anspruch 13 oder 14, **dadurch gekennzeichnet, dass** die Herstellung des Blechteiles (5), insbesondere des Mitnahmeprofils (6), durch Umformung erfolgt.

16. Verfahren nach Anspruch 13, 14 oder 15, **dadurch gekennzeichnet, dass** bei der Herstellung des Mitnahmeprofils (6) zunächst ein Vorprofil (6c) und nach dem Fügen ein Endprofil (6c', 6d, 6e) erzeugt wird.

17. Verfahren nach Anspruch 16, **dadurch gekennzeichnet, dass** das Vorprofil einen konkaven Zahnkopf (6c) zwischen geraden Zahnflanken (6b) aufweist.

18. Verfahren nach Anspruch 16 oder 17, **dadurch gekennzeichnet, dass** das Endprofil (6c', 6d, 6e) durch strecken des Vorprofils respektive des konkaven Zahnkopfes (6c) erzeugt wird.

## Claims

1. Component with internal toothing (3) and with external toothing (6), the component (7) comprising a basic body (2) having the internal toothing (3) and a sheet metal part (5) having the external toothing (6), the sheet metal part (5) being connected to the basic body (2) positively in the tangential and the radial direction, and the sheet metal part (5) having a take-up profile (6) and the basic body (2) having a take-up toothing (4, 4a) engaging at least partially into the take-up profile (6), **characterized in that** the take-up toothing (4) of the basic body (2) is formed by teeth (4a) and **in that** the teeth (4a) have backcut or undercut regions (8, 9).

2. Component according to Claim 1, **characterized in that** the backcut or undercut regions (8, 9) are arranged at the tooth root (4b).

3. Component according to Claim 1 or 2, **characterized in that** the take-up profile (6) bears against the contour of the teeth (4a) and fills the backcut regions (8, 9) with a form fit.

4. Component according to Claim 1, 2 or 3, **characterized in that** the take-up profile (6) has a dovetail-shaped form in the region of a tooth tip (6c', 6d, 6e).

5. Component according to one of Claims 1 to 4, **characterized in that** the take-up profile (6) is pressed as a result of forming into the backcut regions (8, 9).

6. Component according to one of Claims 1 to 5, **characterized in that** the sheet metal part is designed as disc carrier (5) of a shift element.

7. Component according to one of Claims 1 to 6, **characterized in that** the component is designed as a ring wheel (7) of a planetary gear.

8. Component according to one of Claims 1 to 7, **characterized in that** the basic body (2) can be produced from a gearwheel material, in particular from a case-hardenable material.

9. Component according to one of Claims 1 to 8, **characterized in that** the take-up profile (6, 6a, 6b, 6c') is of approximately trapezoidal form.

10. Component according to one of the preceding claims, **characterized in that** the component (7) comprises a ring-wheel carrier (1).

11. Component according to Claim 10, **characterized in that** the ring-wheel carrier (1) is formed as a sheet metal part.

12. Component according to Claim 10 or 11, **characterized in that** the ring-wheel carrier (1) has an annular flange (1b) which is connected positively to the ring wheel (7) or to the basic body (2).

13. Method for producing a component (7) according to one of the preceding claims, **characterized in that** the basic body (2) and the sheet metal part (5) are first produced separately and are subsequently joined together.

14. Method according to Claim 13, **characterized in that** the production of the basic body (2) comprises cutting production.

15. Method according to Claim 13 or 14, **characterized in that** the production of the sheet metal part (5), in particular of the take-up profile (6), takes place by forming.

16. Method according to Claim 13, 14 or 15, **characterized in that**, in the production of the take-up profile (6), a pre-profile (6c) is first generated and, after joining together, a final profile (6c', 6d, 6e) is generated.

17. Method according to Claim 16, **characterized in that** the pre-profile has a concave tooth tip (6c) between straight tooth flanks (6b).

18. Method according to Claim 16 or 17, **characterized in that** the final profile (6c', 6d, 6e) is generated by stretching the pre-profile or the concave tooth tip (6c).

## Revendications

1. Pièce à denture intérieure (3) et denture extérieure (6), la pièce (7) comportant un corps de base (2) comprenant la denture intérieure (3) et une partie en tôle (5) comprenant la denture extérieure (6), la partie en tôle (5) étant reliée au corps de base (2) par engagement par complémentarité de formes dans la direction tangentielle et dans la direction radiale, et la partie en tôle (5) comprenant un profilé d'entraînement (6) et le corps de base (2) comprenant une denture d'entraînement (4, 4a) s'engageant au moins partiellement dans le profilé d'entraînement (6), **caractérisée en ce que** la denture d'entraînement (4) du corps de base (2) est formée par des dents (4a) et **en ce que** les dents (4a) comprennent des régions en contre-dépouille ou évidées (8, 9).

2. Pièce selon la revendication 1, **caractérisée en ce que** les régions en contre-dépouille ou évidées (8, 9) sont disposées au niveau du pied de dent (4b).

3. Pièce selon la revendication 1 ou 2, **caractérisée en ce que** le profilé d'entraînement (6) s'applique contre le contour des dents (4a) et remplit par engagement par complémentarité de formes les régions en contre-dépouille (8, 9).

4. Pièce selon la revendication 1, 2 ou 3, **caractérisée en ce que** le profilé d'entraînement (6) est réalisé en forme de queue d'aronde dans la région d'une tête de dent (6c', 6d, 6e).

5. Pièce selon l'une quelconque des revendications 1 à 4, **caractérisée en ce que** le profilé d'entraînement (6) est enfoncé dans les régions en contre-dépouille (8, 9) par façonnage.

6. Pièce selon l'une quelconque des revendications 1 à 5, **caractérisée en ce que** la partie en tôle est réalisée sous forme de porte-disques (5) d'un élément de commutation.

7. Pièce selon l'une quelconque des revendications 1 à 6, **caractérisée en ce que** la pièce est réalisée sous forme de couronne dentée (7) d'une transmission planétaire.

8. Pièce selon l'une quelconque des revendications 1 à 7, **caractérisée en ce que** le corps de base (2) peut être fabriqué à partir d'un matériau de roue dentée, en particulier d'un matériau pouvant être cémenté.

9. Pièce selon l'une quelconque des revendications 1 à 8, **caractérisée en ce que** le profilé d'entraînement (6, 6a, 6b, 6c') est réalisé approximativement sous forme trapézoïdale.

10. Pièce selon l'une quelconque des revendications précédentes, **caractérisée en ce que** la pièce (7) comporte un support de couronne dentée (1).

11. Pièce selon la revendication 10, **caractérisée en ce que** le support de couronne dentée (1) est réalisé sous forme de partie en tôle.

12. Pièce selon la revendication 10 ou 11, **caractérisée en ce que** le support de couronne dentée (1) comprend une bride annulaire (1b), laquelle est reliée par engagement par complémentarité de formes à la couronne dentée (7), respectivement au corps de base (2).

13. Procédé de fabrication d'une pièce (7) selon l'une quelconque des revendications précédentes, **caractérisé en ce que** le corps de base (2) et la partie en tôle (5) sont tout d'abord fabriqués séparément puis assemblés.

14. Procédé selon la revendication 13, **caractérisé en ce que** la fabrication du corps de base (2) comporte une fabrication par enlèvement de copeaux.

15. Procédé selon la revendication 13 ou 14, **caractérisé en ce que** la fabrication de la partie en tôle (5), en particulier du profilé d'entraînement (6), s'effectue par façonnage.

16. Procédé selon la revendication 13, 14 ou 15, **caractérisé en ce que**, lors de la fabrication du profilé d'entraînement (6), une ébauche de profilé (6c) est tout d'abord produite et, après l'assemblage, un profilé final (6c', 6d, 6e) est produit.

17. Procédé selon la revendication 16, **caractérisé en ce que** l'ébauche de profilé comprend une tête de dent concave (6c) entre des flancs de dent droits (6b).

18. Procédé selon la revendication 16 ou 17, **caractérisé en ce que** le profilé final (6c', 6d, 6e) est produit par étirage de l'ébauche de profilé, respectivement de la tête de dent concave (6c).
